(19) Europäisches Patentamt
European Patent Office
Office européen des brevets

(11) Veröffentlichungsnummer : **0 181 657**
B1

(12) **EUROPÄISCHE PATENTSCHRIFT**

(45) Veröffentlichungstag der Patentschrift :
19.07.89

(51) Int. Cl.⁴ : **G 02 B 26/02**

(21) Anmeldenummer : 85201646.8

(22) Anmeldetag : 09.10.85

(54) Optischer Schalter.

(30) Priorität : 12.10.84 DE 3437489

(43) Veröffentlichungstag der Anmeldung :
21.05.86 Patentblatt 86/21

(45) Bekanntmachung des Hinweises auf die Patenterteilung : 19.07.89 Patentblatt 89/29

(84) Benannte Vertragsstaaten :
DE FR GB SE

(56) Entgegenhaltungen :
US-A- 4 337 995
7TH EUROPEAN CONFERENCE ON OPTICAL
COMMUNICATION, 1981, Seite 15-1 - Seite 15-4,
Copenhagen DK; T.P. TANAKA et al.: "Simple and
Reliable Optical Bypass Switch for Fiber-optic Data
Bus Application"
IBM TECHNICAL DISCLOSURE BULLETIN, Band 25,
Nr. 7A, Dezember 1982, Seiten 3426-3429; L. BALLIET
et al.: "Fiber-optic switch with adjustable alignment"

(73) Patentinhaber : N.V. Philips' Gloeilampenfabrieken
Groenewoudseweg 1
NL-5621 BA Eindhoven (NL)

(72) Erfinder : Snijders, Wilfred André Maria
Groenewoudseweg 1
NL-5621 BA Eindhoven (NL)
Erfinder : Klomp, Jacques Petrus
Groenewoudseweg 1
NL-5621 BA Eindhoven (NL)

(74) Vertreter : Peuckert, Hermann, Dipl.-Ing. et al
Philips Patentverwaltung GmbH Wendenstrasse 35
Postfach 10 51 49
D-2000 Hamburg 1 (DE)

## Beschreibung

Die Erfindung bezieht sich auf einen optischen Schalter mit einem Gehäuse und mit einem durch wenigstens zwei zueinander parallele im Gehäuse befestigte Blattfedern gehaltenen in Ruhelage durch die Federkraft der Blattfedern gegen einen ersten einstellbaren Anschlag gedrückten beweglichen Schaltteil, wobei im Gehäuse und im Schaltteil je wenigstens eine Lichtleitfaser gehalten ist und in wenigstens einer Stellung des Schaltteils Lichtleitfaserenden gegenüberliegen.

Ein solcher Schalter ist im einfachsten Fall als Ein/Ausschalter ausgebildet. Bei einem Schalter mit Umschaltfunktion wird z. B. eine ankommende Lichtleitfaser zwischen zwei abgehenden Lichtleitfasern hin und hergeschaltet.

In der DE-AS 25 31 398 ist ein optischer Schalter beschrieben, bei dem mindestens zwei Lichtleitfasern ähnlich wie bei einem Reedkontakt in einem Gehäuse angeordnet sind und zwar derart, daß ihre Enden in Ruhelage einander nicht gegenüberliegen. Eines der beiden Lichtleitfaserenden ist in einem Rohrstück aus magnetisch wirksamem Material gefaßt und durch die Einwirkung einer magnetischen Kraft wird diese Lichtleitfaser so verbogen, daß die Achsen der beiden Lichtleitfasern zusammenfallen. Hört die Krafteinwirkung auf, so federt das ausgelenkte Lichtleitfaserstück in seine Ausgangslage zurück.

Von maßgeblichen Einfluß auf die Verluste eines optischen Schalters, bei dem der Schaltvorgang durch Bewegen eines Lichtleitfaserendes erfolgt, ist die Lage der Faserenden zueinander. Dabei spielen neben dem Abstand der Fasern in axialer Richtung vor allem der radiale Versatz und der Winkelversatz der Faserachsen eine Rolle. Bei dem aus der DE-AS 25 31 398 bekannten optischen Schalter ist daher eine sehr präzise Justierung des Magnetfeldes bezüglich der im Rohrstück gefaßten Lichtleitfaser erforderlich. Dabei verursachen bereits Veränderungen der Elastizität der Lichtleitfaser, wie sie z. B. durch Temperaturschwankungen hervorgerufen werden können, eine deutliche Erhöhung der Verluste. Soll mit dem bekannten Schalter eine Umschaltfunktion verwirklicht werden, bei der auch in Ruhelage der im Rohrstück gefaßten Lichtleitfaser eine optische Verbindung herstellbar sein soll, so spielt wegen der Wirkung der Schwerkraft bereits die Einbaulage eine Rolle.

Aus der Druckschrift « 7th European Conference on Optical Communication », 1981, Seite 15-1 bis Seite 15-4 ist ein optischer Schalter bekannt, der im wesentlichen aus einem feststehenden und einem beweglichen Block aufgebaut ist, wobei der bewegliche Block durch zwei zueinander parallele Blattfedern am feststehenden Block befestigt ist. Durch die Federkraft der Blattfedern wird der bewegliche Block in Ruhelage gegen einen einstellbaren Anschlag gedrückt. Im feststehenden Block sind zwei Lichtleitfasern gehalten, welche als ankommende Fasern bezeichnet sind. Im beweglichen Block sind ebenfalls zwei Lichtleitfasern gehalten, welche als abgehende Fasern bezeichnet sind. Die Lichtleitfasern sind in dem beweglichen Block bzw. im festen Block derart angeordnet, daß sich in einer Endlage die Faserenden der ankommenden und der abgehenden Fasern gegenüberstehen, während in der anderen Endlage die Endfläche einer der ankommenden Fasern der Endfläche einer der beiden abgehenden Fasern gegenübersteht. Der bewegliche Block trägt an einer Seite einen Ansatz, auf welche die Schneide an einem Schenkel eines winkelig geformten beweglich gelagerten Ankers einwirkt. Der Anker wird mittels eines gesondert gehaltenen Elektromagneten betätigt.

Der Erfindung liegt die Aufgabe zugrunde, einen schnell wirkenden optischen Schalter der eingangs genannten Art zu schaffen, der kleine Abmessungen aufweist, mit einfachen Komponenten kostengünstig herzustellen ist und auch bei Ausgestaltung als Umschalter über eine Vielzahl von Schaltspielen hinweg nur geringe und gleichbleibende Dämpfungswerte aufweist.

Diese Aufgabe wird ausgehend von der eingangs genannten Einrichtung durch die Erfindung dadurch gelöst, daß das Schaltteil selbst wenigstens teilweise aus einem magnetisch wirksamen Material besteht und durch ein unmittelbar auf dieses einwirkende magnetische Feld aus seiner Ruhelage gegen einen zweiten einstellbaren Anschlag auslenkbar ist und daß das magnetische Feld von einem im Gehäuse untergebrachten Elektromagneten erzeugt wird.

Im folgenden wird die Erfindung anhand der Zeichnungen beschrieben und ihre Wirkungsweise erlautert.

Es zeigen :

Fig. 1 ein Ausführungsbeispiel eines optischen Schalter nach der Erfindung

Fig. 2 ein Beispiel für die Anwendung des optischen Schalters.

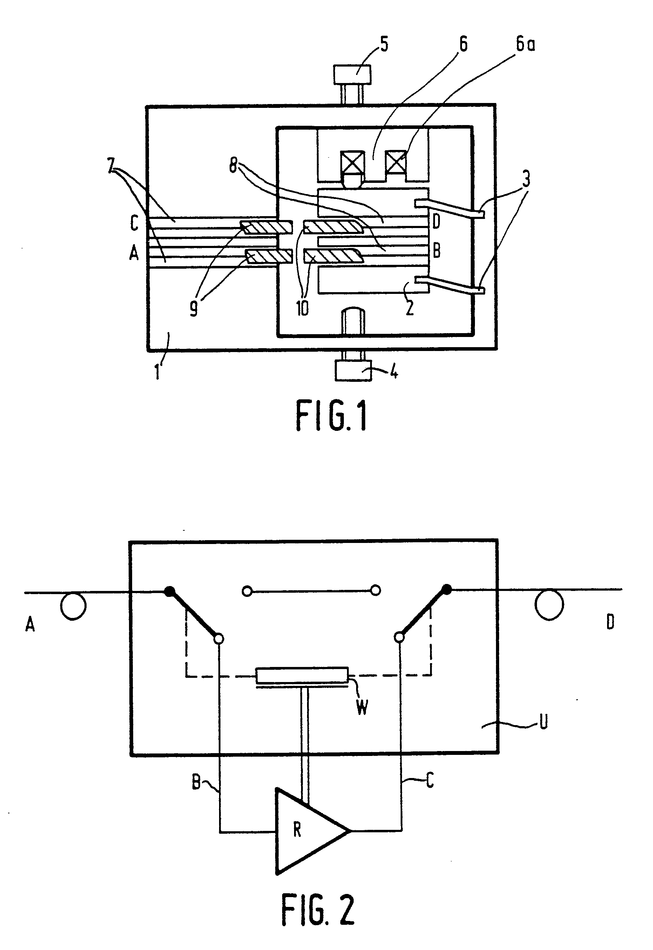

Der in der Fig. 1 in schematischer Darstellung gezeigte optische Schalter besteht aus dem Gehäuse 1 und dem beweglichen Schaltteil 2. Das Gehäuse ist beim Ausführungsbeispiel aus Aluminium gefertigt, während das Schaltteil 2 aus einem magnetisch wirksamen Material besteht. Es ist im Gehäuse 2 mit den beiden zueinander parallelen Blattfedern 3 gehalten, die einerseits in Schaltteil 2 und andererseits an einer Innenseite des Gehäuses eingespannt sind. Der Abstand zwischen den Einspannstellen ist sehr kurz, in diesem Bereich sind die beiden Blattfedern gleich lang. Sie sind unter Vorspannung eingebaut derart, daß sie durch ihre Federkraft das Schaltteil 2 gegen den Anschlag 4 drücken und somit das Schaltteil 2 in einer ersten Position halten. Auf der gegenüberliegenden Seite des Gehäuses befindet sich ein weiterer Anschlag 5 sowie im Magnetteil 6 ein Elektromagnet 6a. Mittels dieses Elektromagneten 6a kann das bewegliche Schaltteil 2 gegen die von den beiden Blattfedern ausgeübte Kraft in seine zweite Position bewegt werden, die durch den zweiten Anschlag 5 bestimmt ist.

Die beiden Anschläge sind als Einstellschrauben ausgebildet, sie sind unabhängig voneinander verstellbar, wobei die beiden Positionen des Schaltteiles ebenfalls unabhängig voneinander sehr genau eingestellt werden können.

Auf der der Einspannstelle für die beiden Blattfedern gegenüberliegenden Seite des Gehäuses sind zwei V-Rinnen 7 an angeordnet, in denen die beiden von außen herangeführten Lichtleitfasern 9 festgelegt sind. Diese Festlegung kann durch Klemmen erfolgen, im Ausführungsbeispiel sind die beiden Lichtleitfasern eingeklebt. Im beweglichen Schaltteil 2 befinden sich zwei weitere V-Rinnen 8, in denen zwei weitere Lichtleitfasern 10 befestigt sind. Diese beiden Lichtwellenleiter sind auf dieser Seite aus dem Gehäuse herausgeführt, wobei durch geeignete Maßnahmen dafür gesorgt ist, daß sie bei den Bewegungen, welche das Schaltteil 2 bei Schaltvorgängen ausführt, nicht geknickt oder unzulässig stark abgebogen werden.

In Fig. 1 ist die aktive Position eingezeichnet, das ist die Position, die das Schaltteil 2 einnimmt, wenn der Elektromagnet erregt ist. Dann liegen die Enden der beiden Paare von Lichtleitfasern einander genau gegenüber. Ein einziger Anschlag, nämlich der Anschlag 5, reicht aus, um gleichzeitig beide optischen Wege von A nach B und von C nach D auf minimale Dämpfung abzustimmen.

In der passiven Lage, wenn das Schaltteil 2 die durch die Federkraft der Blattfedern bestimmte Position einnimmt, liegen sich die Enden je einer Lichtleitfaser der beiden Paare gegenüber, durch welche der Weg von A nach D gebildet wird. In dieser Position ist der optische Weg allein durch den Anschlag 4 auf minimale Dämpfung abzustimmen, wobei die Abstimmung in dieser Position unabhängig von der Abstimmung der ersten Position ist.

Der optische Schalter nach der Erfindung weist über einen großen Temperaturbereich nur geringe optische Verluste auf, deren Werte auch über eine groß Anzahl von Schaltspielen unverändert bleiben. Bei ausgeführten Exemplaren erzielte man bei Versuchen in einem Temperaturbereich von — 30° bis + 75 °C eine Dämpfung von weniger als 0,6 dB und Schaltzeiten von etwa 10 ms.

Das Hauptproblem bei optischen Schaltern, in jeder Schaltstellung eine exakte Ausrichtung der Achsen der Lichtleitfasern aufeinander ohne radialen Versatz und ohne Winkelfehler zu erreichen, ist durch die Erfindung gelöst. Im Fall eines Umschalters, wie er im Ausführungsbeispiel nach Fig. 1 dargestellt ist, wird dieses Problem besonders kompliziert, weil hier insgesamt drei optische Wege vorliegen und einer dieser optischen Wege mit je einer Eingangs- und einer Ausgangsleitung der anderen optischen Wege gebildet wird. Der optische Schalter nach der Erfindung kommt hier mit je einem Abstimmvorgang je Schaltteilposition aus. Dabei weist er nur geringe Abmessungen auf und ist aus einer nur kleinen Anzahl relativ einfacher mechanischer Komponenten aufgebaut.

Ein besonderer Vorteil liegt in der einfachen Herstellungsprozedur, bei der mit einfachen Mitteln eine sehr hohe Genauigkeit erreicht wird.

Zuerst wird das bewegliche Schaltteil mit den beiden Blattfedern 3 im Gehäuse 1 montiert, wobei dafür gesorgt wird, daß das Schaltteil durch die Vorspannung der Blattfedern gegen den Anschlag 4 gedrückt ist. Mit Hilfe des Anschlages 4, der zu diesem Zweck entsprechend verstellt wird, und einer losen Zwischenlage wird er gegen das Magnetteil gedrückt, so daß er die aktive Position einnimmt. In dieser Lage werden Gehäuse und Schaltteil gemeinsam eingespannt. Es werden nun zunächst in einem Arbeitsgang die Oberflächen von Gehäuse und Schaltteil, welche die V-Rinnen tragen sollen, so bearbeitet, daß sie eine Ebene bilden. Sodann werden die V-Rinnen im Gehäuse und im Schaltteil in einem einzigen durchlaufenden Arbeitsgang eingearbeitet, z. B. geätzt oder gefräst. Hierdurch ist auf einfache Weise gewährleistet, daß die V-Rinnen im Schaltteil und im Gehäuse ohne Winkelfehler exakt in jeweils einer Richtung verlaufen und ihre Abstände voneinander in beiden Elementen Schaltteil und Gehäuse identisch sind. Sie haben in bei den Elementen auch die gleiche Tiefe. Die absoluten Werte dieser Parameter sind von geringer Bedeutung. Danach werden die Lichtleitfasern in diese V-Rinnen eingeklemmt oder eingeklebt. Als Abstandsmittel kann zwischen Schaltteil und Gehäuseinnenseite eine Folie eingelegt sein, die nach der Fertigstellung des optischen Schalters wieder entfernt wird. Abschließend wird das Gehäuse mit einer in der Fig. 1 nicht dargestellten Abdeckplatte verschlossen.

In Fig. 2 ist ein Beispiel für die Anwendung eines optischen Schalters gegeben, der gemäß dem in Fig. 1 gezeigten Ausführungsbeispiel als Umschalter ausgebildet ist. Die Lichtleitfasern A und D sind Teile eines Nachrichtennetzes, bei welchem in gewissen Abständen Repeater R eingeschaltet sind. Fällt ein Repeater aus, so ist es erforderlich, ihn durch eine Umgehungsleitung zu überbrücken, damit nicht die gesamte Übertragung vollständig unterbrochen wird. Zu diesem Zweck ist der optische Umschalter U eingeschaltet, an den über die beiden Lichtleitfasern B und C der Repeater R angeschlossen ist. Mit den beiden durchgezogenen Linien zwischen Repeater R und der Wicklung W des Elektromagneten im Umschater U ist angedeutet, daß der Umschalter U durch ein vom Repeater R abgegebenes Signal betätigt wird. Ist der Repeater R in Ordnung, so ist der Elektromagnet erregt, der Umschalter befindet sich im aktiven Zustand und stellt die Verbindungen zwischen A und B und zwischen C und D her. Bei einer Störung fällt der Magnet ab und es wird die Verbindung zwischen A und D durchgeschaltet.

**Patentanspruch**

Optischer Schalter mit einem Gehäuse und mit einem durch wenigstens zwei zueinander parallele im Gehäuse befestigte Blattfedern gehaltenen in Ruhelage durch die Federkraft der Blattfedern gegen einen ersten einstellbaren Anschlag gedrückten beweglichen Schaltteil (2), wobei im Gehäuse und im Schaltteil je wenigstens eine Lichtleitfaser gehalten ist und in wenigstens einer Stellung des Schaltteils Lichtleitfaserenden gegenüberliegen, dadurch gekennzeichnet, daß das Schaltteil (2) selbst wenigstens teilweise aus einem magnetisch wirksamen Material besteht und durch ein unmittelbar auf dieses einwirkende magnetische Feld aus seiner Ruhelage gegen einen zweiten einstellbaren Anschlag (5) auslenkbar ist, und daß das magnetische Feld von einem im Gehäuse (1) untergebrachten Elektromagneten (6a) erzeugt wird.

## Claim

An optical switch which includes a housing and a movable switching member (2) which is retained by at least two leaf springs which are secured in the housing so as to extend parallel to one another, the switching member in the rest position being pressed against a first adjustable abutment by the spring force of the leaf springs, at least one optical fibre each being accommodated in the housing as well as in the switching member, optical fibre ends being situated opposite one another in at least one position of the switching member, characterized in that the switching member (2) itself is at least partly composed of a magnetically active material and can be moved from its rest position against a second adjustable abutment (5) by a magnetic field which directly acts on the magnetically active material, and in that the magnetic field is produced by an electromagnet (6a) accommodated in the housing (1).

## Revendication

Commutateur optique muni d'un boîtier et d'une partie de commutation mobile maintenue par au moins deux lames de ressort fixées parallèlement dans le boîtier et appliquée à l'état de repos sous l'élasticité des lames de ressort contre une première butée réglable, au moins une fibre optique étant maintenue chaque fois dans le boîtier et dans la partie de commutation et des extrémités de fibre optique étant situées les unes en face de l'autre à au moins un endroit de la partie de commutation, caractérisé en ce que la partie de commutation même est constituée au moins partiellement par un matériau magnétique et peut être déviée par un champ magnétique agissant immédiatement sur ce matériau magnétique jusque contre une deuxième butée réglable et que le champ magnétique est obtenu à l'aide d'un électro-aimant disposé dans le boîtier.

FIG.1

FIG. 2